# EUROPÄISCHE PATENTSCHRIFT

(11) **EP 3 530 100 B1**
(45) Veröffentlichungstag und Bekanntmachung des Hinweises auf die Patenterteilung: **15.09.2021**
(21) Anmeldenummer: 18211597.2
(22) Anmeldetag: 11.12.2018
(51) Int. Cl.: A01D 43/08, A01F 25/18

(54) **SELBSTFAHRENDER FELDHÄCKSLER ZUR ABARBEITUNG EINES LANDWIRTSCHAFTLICHEN ARBEITSPROZESSES**
SELF-PROPELLED FORAGE HARVESTER FOR HANDLING AN AGRICULTURAL WORKING PROCESS
RÉCOLTEUSE-HACHEUSE DE FOURRAGE AUTOMOTRICE DESTINÉE À L'EXÉCUTION D'UN PROCESSUS DE TRAVAIL AGRICOLE

(30) Priorität: 26.02.2018 DE 102018104289
(43) Veröffentlichungstag der Anmeldung: 28.08.2019
(73) Patentinhaber: CLAAS Selbstfahrende Erntemaschinen GmbH, 33428 Harsewinkel (DE)
(72) Erfinder: Heitmann, Christoph, 48231 Warendorf (DE); Bönig Dr., Ingo, 33330 Gütersloh (DE); Grove, Carsten, 48361 Beelen (DE); Kirchbeck, Alexander, 48317 Drensteinfurt (DE); Kriebel, Bastian, 48155 Münster (DE)

(56) Entgegenhaltungen:
- EP-A1- 2 591 659
- EP-A1- 2 987 396
- EP-A1- 3 178 307

## Beschreibung

Die vorliegende Erfindung betrifft einen selbstfahrenden Feldhäcksler gemäß dem Oberbegriff des Anspruches 1.

Selbstfahrende Feldhäcksler dienen der Ernte und der Zerkleinerung von Erntegut, welches unter anderem als Futtermittel oder für Biogasanlagen zum Einsatz kommt. Hierzu wird das zerkleinerte bzw. gehäckselte Erntegut in Silos aufgeschichtet und von einem oder mehreren Verdichtungsfahrzeugen verdichtet. Der Verdichtung des Ernteguts auf dem Silo kommt vor dem Hintergrund einer verlustarmen Futtermittelkonservierung eine besondere Bedeutung zu, da die Lagerungsdichte die Haltbarkeit der Silage am geöffneten Silo maßgeblich bestimmt. Einen besonderen Einfluss auf die Verdichtbarkeit von zerkleinertem Erntegut haben die Schnittlänge sowie der relative Trockenmassegehalt in der bearbeiteten Frischmasse.

Während die relative Trockenmasse ein Erntegutparameter ist, der während des Ernteprozesses nicht beeinflussbar ist, stellt die Einstellung der Schnittlänge eine Einflussgröße dar, die von einer Bedienperson des Feldhäckslers vor und während des Ernteprozesses vorgegeben bzw. angepasst wird. Die Einstellung der Schnittlänge beeinflusst maßgeblich die Verdichtbarkeit im Silo als auch die durch den Feldhäcksler erzielbare Flächenleistung. Eine hohe Verdichtbarkeit und eine hohe Flächenleistung stehen sich konträr gegenüber, da eine hohe Verdichtbarkeit kurze Schnittlängen erfordert, während für das Erreichen einer hohen Flächenleistung große Schnittlängen notwendig sind. Eine Anpassung der Schnittlänge erfolgt dabei im Rahmen eines sich anschließenden Verwertungsprozesses auf einem Silo. Hierfür kann ein Schnittlängenbereich vorgegeben werden, innerhalb dessen eine Veränderung der Schnittlänge sinnvoll ist.

Aus der EP 2 132 974 B1 ist ein Feldhäcksler mit einer Steuereinrichtung bekannt, welche zur Beeinflussung von einstellbaren Betriebsparametern von Arbeitsorganen des Feldhäckslers eingerichtet ist. Mittels der Steuereinrichtung wird anhand von Erntegut- und Betriebsparametern und einem Sollkriterium, welches einer angestrebten Verdichtung eines zerkleinerten Erntegutes auf dem Silo entspricht, eine Prognose über die Erreichbarkeit eines am Ende der Ernteprozesskette stehenden Ist-Ernteziels abgeleitet. Die Prognose dient dazu, die Bedienperson darüber zu informieren, ob aufgrund der gewählten Betriebsparameter das gewünschte Ernteziel erreichbar ist. Die Prognose dient des Weiteren dazu, die Bedienperson dazu zu veranlassen, nötigenfalls Betriebsparameteranpassungen vorzunehmen, wenn die Prognose nicht mit dem gewünschten Ernteziel korrespondiert.
Zudem offenbart die EP 2 987 396 die gewichtete Auswahl von Arbeitsstrategien in einem Feldhäcksler, wobei hier die multiple Abhängigkeit der wählbaren Parameter den Fahrer des Feldhäckslers im Unklaren lassen, in welchem Umfang die wählbaren Parameter das Arbeitsergebnis beeinflussen.

Aus EP 2 591 659 ist zudem ein Verfahren bekannt geworden, bei welchem ein Feldhäcksler, ein Transportfahrzeug und ein Verdichtungsfahrzeug in einer Prozesskette zusammenarbeiten.

Ausgehend von dem vorstehend genannten Stand der Technik besteht die Aufgabe der vorliegenden Erfindung darin, einen aus dem Stand der Technik bekannten Feldhäcksler so weiterzuentwickeln, dass eine benutzerseitige Vorgabe einer Arbeitsprozessstrategie vereinfacht wird.

Diese Aufgabe wird erfindungsgemäß durch einen selbstfahrenden Feldhäcksler gemäß den Merkmalen des Anspruches 1 gelöst.

Vorteilhafte Weiterbildungen sind Gegenstand der Unteransprüche.

Gemäß dem Anspruch 1 ist ein selbstfahrender Feldhäcksler zur Abarbeitung eines landwirtschaftlichen Arbeitsprozesses innerhalb einer Prozesskette, mit mehreren Arbeitsorganen, umfassend eine Einzugsvorrichtung, eine Häckselvorrichtung sowie eine Nachbehandlungsvorrichtung, und mit einem Fahrerassistenzsystem zur Ansteuerung der Arbeitsorgane nach mindestens einer vorgebbaren Arbeitsprozessstrategie, welche auf die Erfüllung mindestens eines Qualitätskriteriums gerichtet ist, vorgesehen. Das Fahrerassistenzsystem umfasst einen Speicher zum Hinterlegen von Daten und eine Rechenvorrichtung zur Verarbeitung der in dem Speicher hinterlegten Daten, wobei das Fahrerassistenzsystem eine grafische Benutzerschnittstelle aufweist, mittels der zumindest ein Teil der Arbeitsprozessstrategie vorgebbar ist. Um eine benutzerseitige Vorgabe einer Arbeitsstrategie zu vereinfachen, wird erfindungsgemäß vorgeschlagen, dass ein Erfüllungsgrad konkurrierender Qualitätskriterien mittels der grafischen Benutzerschnittstelle einstellbar ist, wobei als ein jeweiliges Qualitätskriterium "Verdichtbarkeit" oder "Kornaufschluss" einem Qualitätskriterium "Flächenleistung" konkurrierend gegenübersteht und dass diese wechselweise voneinander abhängigen Qualitätskriterien "Verdichtbarkeit" und "Flächenleistung" bzw. "Kornaufschluss" und "Flächenleistung" mittels der grafischen Benutzerschnittstelle visualisierbar sind. Einer Bedienperson des Feldhäckslers werden Einstellmöglichkeiten zur Auswahl und Gewichtung von Arbeitsprozessstrategien dargestellt, wobei zugleich veranschaulicht wird, welche Auswirkungen eine Veränderung des Erfüllungsgrades eines Qualitätskriteriums hinsichtlich des damit konkurrierenden Qualitätskriteriums hat. Dabei stehen die Qualitätskriterien "Verdichtbarkeit" und "Flächenleistung" bzw. "Kornaufschluss" und "Flächenleistung" im Vordergrund, da diese maßgeblich für den durch den selbstfahrenden Feldhäcksler abzuarbeitenden landwirtschaftlichen Arbeitsprozess sind. So hat eine Maximierung des Erfüllungsgrades eines oder beider Qualitätskriterien "Verdichtbarkeit" und "Kornaufschluss" einen großen Einfluss auf die erreichbare Flächenleistung sowie den Kraftstoffverbrauch des Feldhäckslers. Während mit zunehmender Verdichtbarkeit des Erntegutes aufgrund kurzer Schnittlänge die Flächenleistung abnimmt, steigt zugleich der Kraftstoffverbrauch, welcher aus der Ansteuerung der Arbeitsorgane zur Erreichung der kurzen Schnittlänge resultiert. Entsprechendes gilt für einen zunehmenden Kornaufschluss durch die Nachbehandlungsvorrichtung. Ein weiteres Qualitätskriterium kann der Aufbereitungsgrad des gesamten Erntegutes sein, welcher sich nach dem Häckseln und einer anschließenden Nachbearbeitung durch die Nachbehandlungsvorrichtung einstellt.
Erfindungsgemäß ist den paarweise konkurrierenden Qualitätskriterien jeweils eine Erfüllungsgradvariable zugeordnet, die jeweils durch ein virtuelles Bedienelement der grafischen Benutzerschnittstelle visualisierbar und einstellbar ist.

Dabei sind die konkurrierenden Qualitätskriterien "Verdichtbarkeit" und "Flächenleistung" durch einen Betriebsparameter "Schnittlänge" beeinflussbar. Der Betriebsparameter "Schnittlänge" wird insbesondere durch die Einzugsgeschwindigkeit der Einzugsvorrichtung, die Drehgeschwindigkeit der Häckselvorrichtung bestimmt.

Die konkurrierenden Qualitätskriterien "Kornaufschluss" und "Flächenleistung" sind durch einen wenigstens Betriebsparameter "Spaltweite" und/oder "Differenzdrehzahl" der Nachbehandlungsvorrichtung beeinflussbar. Die Nachbearbeitungsvorrichtung weist ein angetriebenes Walzenpaar mit einer profilierten Oberfläche auf, welche zueinander beabstandet im Gutfluss durch den Feldhäcksler angeordnet sind. Der Abstand zwischen den Walzen sowie eine zwischen den Walzen bestehende Drehzahldifferenz sind veränderbar. Der Grad des Aufschließens des Korns bestimmt, welcher Energiegehalt zu einem späteren Zeitpunkt bei einem Einsatz als Futtermittel oder im Fermenter einer Biogasanlage verfügbar ist. Darüber hinaus trägt die Nachtbearbeitungsvorrichtung zu einer Zerfaserung des Erntegutes bei. Letzteres beeinflusst wiederum die Verdichtbarkeit des Erntegutes in dem Silo. Dabei ist für den Grad des Aufschließens der Körner neben der Drehzahldifferenz der Walzen der Abstand zwischen diesen maßgeblich. Hierbei führt eine Verringerung des Walzenabstandes zu einer erhöhten Leistungsaufnahme der Nachbearbeitungsvorrichtung, d.h. zu einem erhöhten Kraftstoffverbrauch.

Gemäß einer vorteilhaften Weiterbildung kann das Fahrerassistenzsystem eine Kommunikationsschnittstelle umfassen, welche zum Empfang von Daten einer Datenverarbeitungsvorrichtung eingerichtet ist, die einem anderen am Ernteprozess beteiligten Prozessteilnehmer zugeordnet ist. Auf diese Weise können dem Fahrerassistenzsystem Informationen bereitgestellt werden, welche einen Einfluss auf die jeweilige Arbeitsprozessstrategie haben können oder die Strategie an sich. Insbesondere kann der Erfüllungsgrad der konkurrierenden Qualitätskriterien "Verdichtbarkeit" und "Flächenleistung" in Abhängigkeit von einem Arbeitsprozess der Prozesskette, der von einem von dem Feldhäcksler unabhängigen Prozessteilnehmer zu erbringen ist, einstellbar sein. Hierbei steht insbesondere eine Kommunikation zwischen einem Verdichterfahrzeug auf einem Silo als unabhängiger Prozessteilnehmer und dem Feldhäcksler zwischen der Datenverarbeitungsvorrichtung und dem Fahrerassistenzsystem im Vordergrund. Denkbar ist vor diesem Hintergrund auch eine Kommunikation zwischen einem Transportfahrzeug und dem Feldhäcksler.

Bevorzugt kann der Erfüllungsgrad der konkurrierenden Qualitätskriterien "Verdichtbarkeit" und "Flächenleistung" in Abhängigkeit von einem Arbeitsprozess der Prozesskette, der von einem von dem Feldhäcksler unabhängigen Prozessteilnehmer zu erbringen ist, einstellbar sein. Mittels der dem Verdichterfahrzeug zugeordneten Datenverarbeitungsvorrichtung kann in Abhängigkeit von einer aktuellen Schichthöhe im Silo der Erfüllungsgrad der konkurrierenden Qualitätskriterien "Verdichtbarkeit" und "Flächenleistung" verändert werden. So kann bei einer geringen Schichthöhe der Erfüllungsgrad des Qualitätskriteriums "Flächenleistung" eine stärkere Gewichtung erfahren, so dass durch das Fahrerassistenzsystem eine größere Schnittlänge eingestellt wird, um eine möglichst große Flächenleistung zu erzielen. Da sich mit zunehmender Schichthöhe auf dem Silo aufgrund des Eigengewichts des Erntegutes der Druck auf die unteren Erntegutschichten erhöht, können untere Schichten in dem Silo bei einem etwa gleichen Trockenmassegehalt eine größere Schnittlänge aufweisen als obere Schichten.

Hierzu kann die Datenverarbeitungsvorrichtung eine grafische Benutzerschnittstelle aufweisen, welche der Visualisierung der vorgegebenen Arbeitsprozessstrategie dient. Bevorzugt ist die Datenverarbeitungsvorrichtung zur Ausführung eines Programmcodes, einer sogenannte App, eingerichtet. Die Datenverarbeitungsvorrichtung kann dabei als ein Mobilfunkgerät, insbesondere ein Smartphone, oder ein Tablet-PC ausgebildet sein.

Somit kann die Datenverarbeitungsvorrichtung zur Einstellung des Erfüllungsgrades konkurrierender Qualitätskriterien eingerichtet sein. Hierdurch ist eine Beeinflussung der Arbeitsprozessstrategie durch einen Prozessteilnehmer möglich, der unmittelbar von dem Erfüllungsgrad der konkurrierenden Qualitätskriterien abhängig ist. Dies ist beispielsweise bei der Verdichtung des zerkleinerten Erntegutes auf dem Silo von Bedeutung.

Bevorzugt kann eine durch die Datenverarbeitungsvorrichtung übermittelte Anforderung zur Änderung des Erfüllungsgrades konkurrierender Qualitätskriterien durch die grafische Benutzerschnittstelle des Fahrerassistenzsystems anzeigbar sein. Auf diese Weise wird eine Bedienperson des Feldhäckslers über eine von außen, d.h. von einem Dritten am Arbeitsprozess beteiligten Prozessteilnehmer, initiierte Anpassung der Arbeitsprozessstrategie informiert. Darüber hinaus ist es denkbar, dass eine Anpassung der Arbeitsprozessstrategie der Bestätigung durch die Bedienperson des Feldhäckslers bedarf.

In einer weiteren vorteilhaften Ausgestaltung der Erfindung umfasst ein System zur Abarbeitung landwirtschaftlicher Arbeitsprozesse innerhalb einer Prozesskette, zumindest einen erfindungsgemäßen selbstfahrenden Feldhäcksler, zumindest ein Transportfahrzeug sowie zumindest ein Verdichtungsfahrzeug, wobei der zumindest eine selbstfahrende Feldhäcksler mit dem Fahrerassistenzsystem zur Ansteuerung der Arbeitsorgane nach mindestens einer vorgebbaren Arbeitsprozessstrategie ausgestattet ist, welche auf die Erfüllung mindestens eines Qualitätskriteriums gerichtet ist, welches einen Speicher zum Hinterlegen von Daten und eine Rechenvorrichtung zur Verarbeitung der in dem Speicher hinterlegten Daten umfasst, welches die grafische Benutzerschnittstelle aufweist, mittels der zumindest ein Teil der Arbeitsprozessstrategie vorgebbar ist, und wobei dem zumindest einen Verdichterfahrzeug eine mit dem Fahrerassistenzsystem bidirektional kommunizierende Datenverarbeitungsvorrichtung mit einer grafischen Benutzerschnittstelle zugeordnet ist, wobei ein Erfüllungsgrad konkurrierender Qualitätskriterien mittels der grafischen Benutzerschnittstelle einstellbar ist, wobei als ein jeweiliges Qualitätskriterium "Verdichtbarkeit" oder "Kornaufschluss" einem Qualitätskriterium "Flächenleistung" konkurrierend gegenübersteht und dass diese wechselweise voneinander abhängigen Qualitätskriterien "Verdichtbarkeit" und "Flächenleistung" bzw. "Kornaufschluss" und "Flächenleistung" mittels der grafischen Benutzerschnittstelle visualisierbar sind, und wobei den paarweise konkurrierenden Qualitätskriterien (33, 34; 33, 35) jeweils eine Erfüllungsgradvariable (E1, E2) zugeordnet ist, die jeweils durch ein virtuelles Bedienelement (27, 32) der grafischen Benutzerschnittstelle (19) visualisierbar und einstellbar ist.

Dabei kann die Datenverarbeitungsvorrichtung dazu eingerichtet sein, einen sich in Abhängigkeit von einer vorgenommenen Änderung des Erfüllungsgrad eines Qualitätskriteriums ändernden Erntegutparameter anzuzeigen. Hierzu kann die, insbesondere mobile, Datenverarbeitungsvorrichtung ein Display oder eine grafische Benutzerschnittstelle aufweisen. Dies ist insbesondere bei einer Verstellung des Erfüllungsgrades des Qualitätskriteriums "Verdichtbarkeit" von Bedeutung, da damit eine Anpassung der Schnittlänge durch das Fahrerassistenzsystem verbunden ist. Wird die Arbeitsprozessstrategie zugunsten einer höheren Flächenleistung von "Hohe Verdichtbarkeit" zu "Hohe Flächenleistung" verschoben, geht damit eine Änderung des Erntegutparameter "Schnittlänge" einher. Das Fahrerassistenzsystem steuert die Arbeitsorgane an, eine größere Schnittlänge zu realisieren. Diese Information ist für den Verdichtungsprozess auf dem Silo von Bedeutung, da dort in Abhängigkeit von der Schnittlänge des Erntegutes über die Einbringung des zerkleinerten Ernteguts entschieden wird. So wird Erntegut mit kürzerer Schnittlänge aufgrund seiner höheren Verdichtbarkeit in einer höher gelegenen Schicht des Silos ausgebracht, während Erntegut mit größerer Schnittlänge in einer unteren Schicht des Silos eingetragen wird. Somit kann trotz geringerer Verdichtbarkeit des Erntegutes wegen der größeren Schnittlänge eine gute Verdichtbarkeit erzielt werden, da zusätzlich das Eigengewicht der höheren Schichten zu einer ausreichenden Verdichtung beiträgt. Die Bedienperson des Verdichtungsfahrzeugs und/oder des Transportfahrzeugs kann somit mittels der jeweiligen Datenverarbeitungsvorrichtung darüber informiert werden, welche Schnittlänge das zerkleinerte Erntegut aufweist, welches zum Silo transportiert bzw. angeliefert wird, um entscheiden zu können, auf welcher Schichthöhe des Silos das jeweilige Erntegut ausgebracht wird.

Die vorliegende Erfindung wird nachstehend anhand eines in den Zeichnungen dargestellten Ausführungsbeispieles näher erläutert.

Es zeigen:
- Fig. 1: eine schematische Darstellung eines Feldhäckslers in Seitenansicht;
- Fig. 2: eine schematische Darstellung des Aufbaus eines Fahrerassistenzsystems;
- Fig. 3: eine schematische Visualisierung eines Silos mit unterschiedlichen Schichthöhen zerkleinerten Erntegutes auf einem Bildschirm einer grafischen Benutzerschnittstelle des Fahrerassistenzsystems;
- Fig. 4: eine Menüoberfläche der grafischen Benutzerschnittstelle mit mehreren Ernteprozessstrategien;
- Fig. 5a, 5b: eine grafische Benutzerschnittstelle des Fahrerassistenzsystems gemäß Fig. 3 in einer weiteren Ausführungsform.

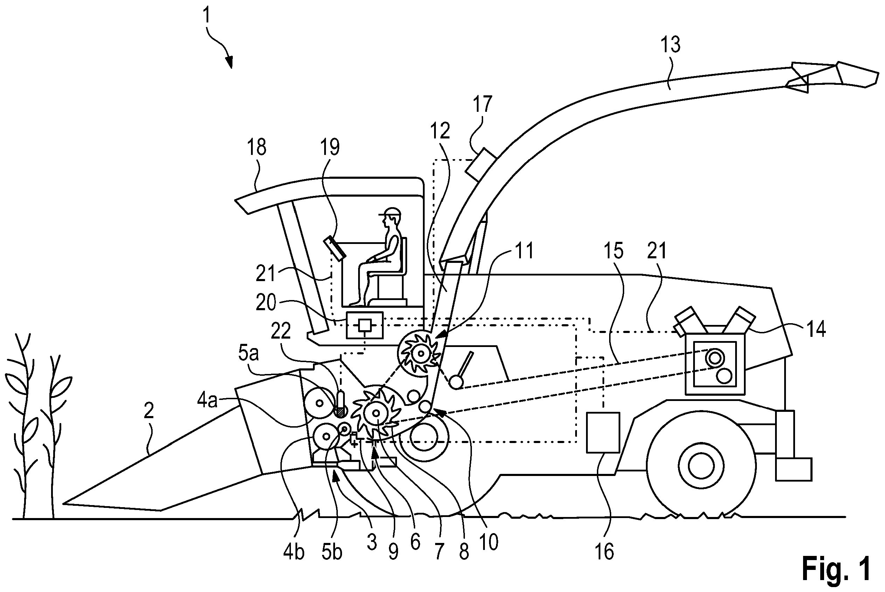

In Fig. 1 ist eine schematische Darstellung eines Feldhäckslers 1 in Seitenansicht gezeigt. Der Feldhäcksler 1 weist ein Vorsatzgerät 2 zum Ernten von, insbesondere stängeligem, Erntegut auf. Das von dem Vorsatzgerät 2 aufgenommene Erntegut wird einer Einzugsvorrichtung 3 zugeführt. Die Einzugsvorrichtung 3 umfasst zumindest ein erstes Paar Walzen 4a, 4b und ein zweites Paar Walzen 5a, 5b, die an einem Rahmen oder einem Gehäuse angeordnet sind. Die zumindest zwei Walzenpaare 4a, 4b und 5a, 5b dienen dem Einzug und Vorpressen des Erntegutes. Der Einzugsvorrichtung 3 ist eine Häckselvorrichtung 6 nachgeordnet. Die Häckselvorrichtung 6 umfasst eine mit Häckselmessern 8 bestückte, rotierend angetriebene Häckseltrommel 7. Zum Zerkleinern des in Form einer verdichteten Erntegutmatte zugeführten Erntegutes wirken die mit der Häckseltrommel 7 rotierenden Häckselmesser 8 mit einer ortsfest angeordneten Gegenschneide 9 zusammen. Der Abstand der Gegenschneide 9 relativ zum Hüllkreis der Häckselmesser 8 lässt sich ein- bzw. nachstellen. Ein möglichst geringer Abstand trägt zu einem reduzierten Kraftbedarf beim Schneiden und zu einer konstanten Schnittqualität bei.

Das aus der Häckselvorrichtung 6 austretende zerkleinerte Erntegut kann einer optional vorgesehenen Nachbearbeitungsvorrichtung 10 zugeführt werden. Die Nachbearbeitungsvorrichtung 10, auch als Konditioniereinrichtung oder Corncracker bezeichnet, dient dem Aufschließen von Maiskörnern, um die Verwertbarkeit bzw. Energieausbeute bei einem Einsatz als Futtermittel bzw. in einer Biogasanlage zu erhöhen. Derartige Nachbearbeitungsvorrichtungen 10 bestehen aus einem Walzenpaar, wobei die Walzen mit unterschiedlichen Drehzahlen angetrieben werden. Das Drehzahlverhältnis des Walzenpaares der Nachbearbeitungsvorrichtung 10 ist variierbar. Der Kornaufschluss wird insbesondere durch eine Spaltweite zwischen den beiden Walzen der Nachbearbeitungsvorrichtung 10 bestimmt. Je geringer die Spaltweite desto höher der Kornaufschluss. Die Spaltweite ist einstellbar. Die Nachbearbeitungsvorrichtung 10 ist bei Bedarf aus dem Gutflussweg des Feldhäckslers 1 entfernbar.

Von der Häckselvorrichtung 6 oder der optionalen Nachbearbeitungsvorrichtung 10 gelangt das zerkleinerte Erntegut zu einem Nachbeschleuniger 11, welcher das Erntegut durch einen Förderschacht 12 und einen sich daran anschließenden Auswurfkrümmer 13 an ein benachbart zu dem Feldhäcksler 1 fahrendes - nicht dargestelltes - Transportfahrzeug überlädt. Das Transportfahrzeug transportiert das bearbeitete Erntegut zu einem hier nicht dargestellten Silo, in welchem es durch ein oder mehrere Verdichtungsfahrzeuge verdichtet wird. An dem Auswurfkrümmer 13 ist ein Sensor 17 angeordnet, welcher zumindest zur Bestimmung des Feuchtigkeitsgehalts des zerkleinerten Erntegutes respektive der Trockenmasse eingerichtet ist. Der Sensor 17 kann als NIR-Sensor ausgeführt sein, welcher auch zur Detektion von Inhaltsstoffen wie Rohasche oder Rohproteingehalt des vorbeiströmenden Erntegutes eingerichtet ist.

Zum Antreiben des Feldhäckslers 1 ist eine als Verbrennungsmotor ausgebildete Antriebsvorrichtung 14 vorgesehen, die mittels eines Riementriebs 15 die Häckselvorrichtung 6, die Nachbearbeitungsvorrichtung 10 und den Nachbeschleuniger 11 antreibt. Das Vorsatzgerät 2 sowie die Einzugsvorrichtung 3 sind durch einen weiteren Antriebsstrang antreibbar, welcher mechanisch mit der Häckselvorrichtung 6 gekoppelt sein kann oder unabhängig von der Häckselvorrichtung 6 hydrostatisch betreibbar ist. Weiterhin ist ein, insbesondere hydrostatischer, Fahrantrieb 16 vorgesehen, mit welchem die Fahrgeschwindigkeit des Feldhäckslers 1 regelbar ist.

Der Feldhäcksler 1 weist eine Kabine 18 auf, in der eine grafische Benutzerschnittstelle 19 vorgesehen ist, welche einer Bedienperson des Feldhäckslers 1 zur Verfügung steht, um beispielsweise Betriebsparameter ein- und verstellen zu können und um die Bedienperson über aktuelle Betriebs- bzw. Erntebedingungen zu informieren. Hierzu ist die grafische Benutzerschnittstelle 19 als ein Touchscreen oder ein Display mit daran angeordneten Bedienelementen ausgebildet. Die grafische Benutzerschnittstelle 19 steht durch ein Bussystem 21 mit einem Fahrerassistenzsystem 20 des Feldhäckslers 1 in Verbindung. Das Bussystem 21 verbindet darüber hinaus den Sensor 17 am Auswurfkrümmer 13 sowie einen Sensor 22 der Einzugsvorrichtung 3 und weitere - nicht dargestellte - Sensoren und Aktoren zur Überwachung und Einstellung von Vorsatzgerät 2, Einzugsvorrichtung 3, Häckselvorrichtung 6 sowie den Fahrantrieb 16 mit dem Fahrerassistenzsystem 20. Diese weiteren Sensoren und Aktoren sind hinreichend bekannt, so dass auf diese nicht näher eingegangen werden muss.

Um während des Ernteprozesses eine definierte Schnittlänge des Erntegutes zu gewährleisten, die durch die grafische Benutzerschnittstelle 19 vorgebbar ist, wird auf dem Weg des Erntegutes durch den Feldhäcksler 1 laufend die Vortriebsgeschwindigkeiten des jeweils nachfolgenden Arbeitsorgans gegenüber dem vorangehenden erhöht. Das bedeutet, dass die Walzenpaare 4a, 4b und 5a, 5b der Einzugsvorrichtung 3 mit einer geringeren Umfangsgeschwindigkeit angetrieben werden, als die Häckseltrommel 7 der Häckselvorrichtung 6. Die Veränderung der Antriebsgeschwindigkeit der Walzenpaare 4a, 4b und 5a, 5b der Einzugsvorrichtung 3 führt zu einer langsameren oder schnelleren Zuführung des von dem Vorsatzgerät 2 aufgenommenen Erntegutes in die Häckselvorrichtung 6, was entsprechend zu einer kürzeren oder längeren Schnittlänge führt.

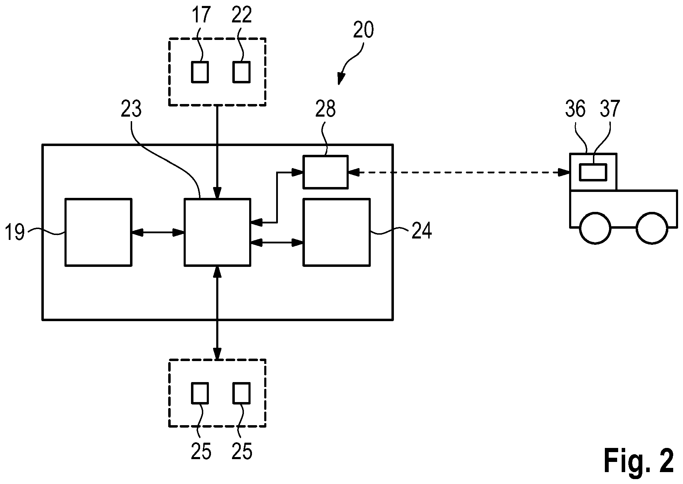

In Fig. 2 ist schematisch der Aufbau des Fahrerassistenzsystems 20 dargestellt. Das Fahrerassistenzsystem 20 umfasst eine Rechenvorrichtung 23 und einen Speicher 24 zum Hinterlegen von Daten, wie die von den Sensoren 17 und 22 bereitgestellten Messsignale. Die in dem Speicher 24 hinterlegten Daten werden von der Rechenvorrichtung 23 verarbeitet. Die Rechenvorrichtung 23 steht durch das Bussystem 21 mit Aktoren 25 des Feldhäckslers 1 in Verbindung, um diese zu überwachen und anzusteuern. Weiterhin umfasst das Fahrerassistenzsystem 20 eine Kommunikationsschnittstelle 28, mittels der ein bidirektionaler Datenaustausch mit einer, insbesondere mobilen, Datenverarbeitungsvorrichtung 37 eines weiteren Prozessteilnehmers, hier einem Verdichtungsfahrzeug 36, ermöglicht wird.

Die Häckselvorrichtung 6 und das Fahrerassistenzsystem 20 bilden einen Häckselautomaten, indem die Rechenvorrichtung 23 dazu eingerichtet ist, eine Verdichtung des zerkleinerten Erntegutes anhand von sensorisch erfassten Erntegutparametern während eines Ernteprozesses fortlaufend zu bestimmen, um eine zu adaptierende Schnittlänge zur Beibehaltung einer konstanten Verdichtbarkeit autonom zu ermitteln und vorzugeben. Der Häckselautomat koordiniert alle für die Einhaltung einer konstanten Verdichtbarkeit des Erntegutes zusammenwirkenden Arbeitsaggregate, d.h. die Betriebsparameter zumindest der Einzugsvorrichtung 3 und der Häckselvorrichtung 6, ohne das es eines Eingriffs von außen durch eine Bedienperson bedarf. Dabei kann die Bedienperson durch die grafische Benutzerschnittstelle 19 eine gewünschte Ziel-Schnittlänge vorgeben, ohne über das zum Erreichen der Ziel-Schnittlänge erforderliche Wissen zu verfügen, welche Einstellungen der Betriebsparameter zumindest der Einzugsvorrichtung 3 und der Häckselvorrichtung 6 erforderlich sind. Darüber hinaus kann der Häckselautomat in entsprechender Weise auch die Betriebsparameter der Nachbehandlungsvorrichtung 10 koordinieren.

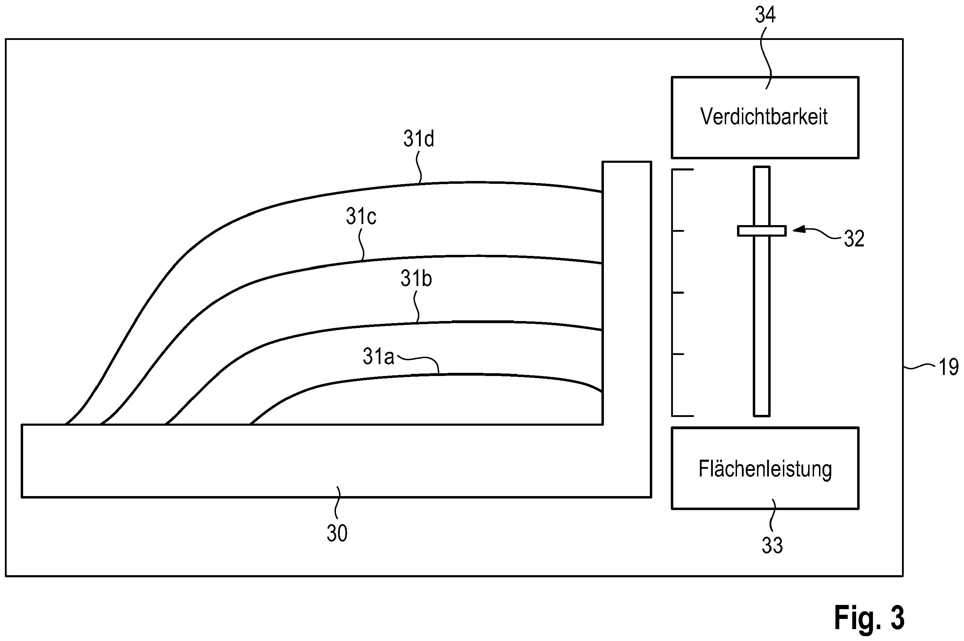

Die Darstellung in Fig. 3 zeigt schematisch eine Visualisierung eines Silos 30 mit unterschiedlichen Schichthöhen 31a, 31b, 31c, 31d zerkleinerten Erntegutes auf dem Bildschirm der grafischen Benutzerschnittstelle 19. Diese Visualisierung kann analog auch auf einer, insbesondere mobilen, Datenverarbeitungsvorrichtung 37 des Verdichtungsfahrzeugs 36 oder eines Transportfahrzeugs, wie beispielsweise einem Smartphone oder Tablet-PC, mittels einer geeigneten Applikation, einer sogenannten App, erfolgen. Weiterhin zeigt die Darstellung in Fig. 3 einen als virtuellen Schiebsteller 32 ausgeführtes Bedienelement, welcher zwischen zwei konträren Qualitätskriterien, "Flächenleistung" 33 und "Verdichtbarkeit" 34 einer jeweiligen Arbeitsprozessstrategie "Hohe Flächenleistung" oder "Hohe Verdichtbarkeit" verstellbar ist. Die jeweilige Arbeitsprozessstrategie ist auf die Erfüllung zumindest eines Qualitätskriteriums ausgerichtet. Hierzu erfolgt die Ansteuerung der Arbeitsorgane seitens des Häckselautomaten entsprechend der Zielstellung, die mit der Arbeitsprozessstrategie verbunden ist. Die Positionierung des virtuellen Schiebstellers 32 zwischen den beiden konträren Qualitätskriterien 33, 34 führt zu einer unterschiedlichen Einstellung einer Erfüllungsgradvariablen E1, E2, mit der der Erfüllungsgrad der konträren Qualitätskriterien 33, 34 bei der Erreichung der jeweiligen Arbeitsprozessstrategie veränderbar ist. Somit kann das Qualitätskriterium "Flächenleistung" 33 stärker priorisiert werden, was mit einer Einstellung einer großen Schnittlänge durch den Häckselautomaten einhergeht. Wird der Schiebsteller 32 in Richtung des Qualitätskriteriums "Verdichtbarkeit" 34 verschoben, führt dies zu einer Einstellung einer kürzeren Schnittlänge.

Mit Blick auf eine Vereinfachung der Abläufe bei der logistischen Planung kann seitens der Bedienperson des Verdichtungsfahrzeugs 36eine Arbeitsprozessstrategie vorgegeben und im Verlauf des Ernteprozesses angepasst werden. So kann die Bedienperson des Verdichtungsfahrzeugs zunächst das Qualitätskriterium "Flächenleistung" 33 priorisieren, da bei geringer Schichthöhe 31a im Silo 30 größere Schnittlängen tolerierbar sind, auch bei höherem Trockenmassegehalt. Die Bedienperson des Verdichtungsfahrzeugs 36 gibt somit die Arbeitsprozessstrategie "Hohe Flächenleistung" vor. Die Einstellung der Schnittlänge kann dabei anhand zumindest einer Kennlinie konstanter Verdichtbarkeit erfolgen, die im Speicher 24 des Fahrerassistenzsystems 20 hinterlegt sind und zyklisch angepasst werden. Im Verlauf des Aufschichtens in dem Silo 30 kommt es daher dennoch zu einer ausreichend guten Verdichtung. Mit zunehmender Schichthöhe 31b, 31c verändert die Bedienperson des Verdichtungsfahrzeugs 36 den Erfüllungsgrad des Qualitätskriteriums von "Flächenleistung" 33 hin zu "Verdichtbarkeit" 34 durch eine Veränderung der Erfüllungsvariablen E1. Diese Information wird von der dem Verdichtungsfahrzeug 36 zugeordneten Datenverarbeitungsvorrichtung 37 an den Feldhäcksler 1 übermittelt. Die Änderung des Erfüllungsgrades des Qualitätskriteriums 33, 34 oder 35 und eines damit verbundenen Arbeitsprozessstrategiewechsels kann der Bedienperson des Feldhäckslers 1 durch die grafische Benutzerschnittstelle 19 lediglich angezeigt werden, wenn der Häckselautomat aktiv ist. Denkbar ist aber auch, dass die Bedienperson des Feldhäckslers 1 die Vornahme einer Änderung des Erfüllungsgrades des Qualitätskriteriums 33, 34, 35 aktiv bestätigen muss.

Im Rahmen einer übergreifenden Kommunikation zwischen den Prozessteilnehmern, insbesondere mittels eines Flottenmanagementsystems, d.h. dem wenigstens einen Feldhäcksler 1, dem zumindest einen zwischen dem abzuerntenden Feld und dem Silo pendelnden Transportfahrzeug sowie dem wenigstens einen Verdichtungsfahrzeug 36 auf dem Silo, ist die Bedienperson des Verdichtungsfahrzeugs 36 darüber informierbar, welches Transportfahrzeug gemäß der jeweils vorgegebenen Arbeitsprozessstrategie bearbeitetes zerkleinertes Erntegut anliefert. Die Bedienperson des Verdichtungsfahrzeugs 36 wird somit darüber in Kenntnis gesetzt, zu welchem Zeitpunkt zerkleinertes Erntegut mit höherer Verdichtbarkeit, d.h. kürzerer Schnittlänge, das Silo erreicht. Dieses Erntegut kann entsprechend weiter oben, d.h. oberhalb einer höher gelegenen Schicht, im Silo aufgeschichtet werden.

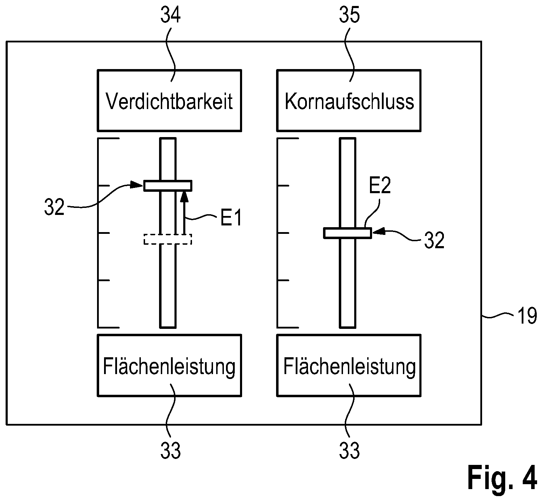

Die Darstellung gemäß Fig. 4 zeigt eine Menüoberfläche der grafischen Benutzerschnittstelle 19 mit einer Visualisierung mehrerer Arbeitsprozessstrategien. Neben den Qualitätskriterien "Flächenleistung" 33 und "Verdichtbarkeit" 34 einer ersten Arbeitsprozessstrategie ist eine weitere Arbeitsprozessstrategie "Guter Kornaufschluss" dargestellt, welche als strategische Vorgaben die Qualitätskriterien "Flächenleistung" 33 und "Kornaufschluss" 35 umfasst. Auch zwischen diesen beiden konträren Qualitätskriterien 33 und 35 ist ein als virtueller Schiebsteller 32 ausgeführtes Bedienelement vorgesehen, welcher eine Veränderung des Erfüllungsgrades durch Anpassung der Erfüllungsvariablen E2 bei deren Erreichung ermöglicht. Die Veränderung der Erfüllungsgradvariablen E2 beeinflusst den Grad der Erreichung des Qualitätskriteriums 33 oder 35, wobei eine Verschiebung des Erfüllungsgrades hin zu dem Qualitätskriterium "Flächenleistung" 33 und/oder "Kornaufschluss" 35 mit einer Abnahme der erreichbaren Flächenleistung und einem zunehmenden Kraftstoffverbrauch einhergehen. So erhöht sich die Leistungsaufnahme der Nachbearbeitungsvorrichtung 10, wenn der Erfüllungsgrad in Richtung des Qualitätskriteriums "Guter Kornaufschluss" 35 verschoben wird, was eine Reduzierung der Spaltweite des Walzenpaares der Nachbearbeitungsvorrichtung 10 bedeutet.

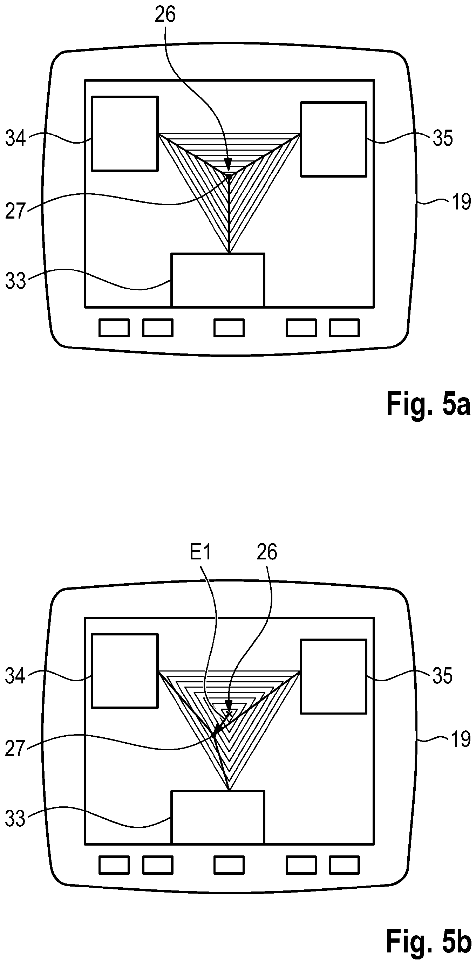

Eine weitere nicht unter die Erfindung fallende Ausgestaltung der grafischen Benutzerschnittstelle 19 ist in Fig. 5a und 5b dargestellt. Bei dem in Fig. 5a dargestellten Ausführungsbeispiel handelt es sich bei der Erfüllungsvariablen E1, E2 jeweils um einen Zeiger, der von der Mittelstellung 26 ausgeht. Entsprechend ist die in Fig. 5a und 5b dargestellte Erfüllungsvariable E1 beispielsweise definiert durch einen Winkel, der die Richtung des Zeigers angibt, und einen Betrag, der die Länge des Zeigers angeht. Für die Erfüllungsvariable E2 gilt dies entsprechend.

Bei dem in Fig. 5a dargestellten Ausführungsbeispiel wird ein Bedienelement 27 über die grafische Benutzerschnittstelle 19 visualisiert, dem die drei Qualitätskriterien 33, 34, 35 zugeordnet sind. Durch eine Verstellung bzw. Verschiebung des Bedienelements 27 aus der Mittelstellung 26 heraus lässt sich eine Gewichtung zwischen den Qualitätskriterien 33, 34 und 35 vorgeben. Die Gewichtungsvariable E1 ist, wie weiter oben bereits angesprochen, ein Zeiger, der in Fig. 5b dargestellt ist.

**Bezugszeichenliste**

| | | | |
|---|---|---|---|
| 1 | Feldhäcksler | 30 | Virtuelles Silo |
| 2 | Vorsatzgerät | 31a | Schichthöhe |
| 3 | Einzugsvorrichtung | 31b | Schichthöhe |
| 4a | Walze | 31c | Schichthöhe |
| 4b | Walze | 31d | Schichthöhe |
| 5a | Walze | 32 | Virtueller Schiebsteller |
| 5b | Walze | 33 | Qualitätskriterium |
| 6 | Häckselvorrichtung | 34 | Qualitätskriterium |
| 7 | Häckseltrommel | 35 | Qualitätskriterium |
| 8 | Häckselmesser | 36 | Verdichtungsfahrzeug |
| 9 | Gegenschneide | 37 | Datenverarbeitungsvorrichtung |
| 10 | Nachbearbeitungsvorrichtung | | |
| 11 | Nachbeschleuniger | E1 | Erfüllungsvariable |
| 12 | Förderschacht | E2 | Erfüllungsvariable |
| 13 | Auswurfkrümmer | | |
| 14 | Antriebsvorrichtung | | |
| 15 | Riemenrieb | | |
| 16 | Fahrantrieb | | |
| 17 | Sensor | | |
| 18 | Kabine | | |
| 19 | Grafische Benutzerschnittstelle | | |
| 20 | Fahrerassistenzsystem | | |
| 21 | Bussystem | | |
| 22 | Sensor | | |
| 23 | Rechenvorrichtung | | |
| 24 | Speicher | | |
| 25 | Aktoren | | |
| 26 | Mittelstellung | | |
| 27 | Bedienelement | | |
| 28 | Kommunikationsschnittstelle | | |

## Patentansprüche

1. Selbstfahrender Feldhäcksler (1) zur Abarbeitung eines landwirtschaftlichen Arbeitsprozesses innerhalb einer Prozesskette, mit mehreren Arbeitsorganen, umfassend eine Einzugsvorrichtung (3), eine Häckselvorrichtung (6) sowie eine Nachbehandlungsvorrichtung (10), und mit einem Fahrerassistenzsystem (20) zur Ansteuerung der Arbeitsorgane nach mindestens einer vorgebbaren Arbeitsprozessstrategie, welche auf die Erfüllung mindestens eines Qualitätskriteriums (33, 34, 35) gerichtet ist, wobei das Fahrerassistenzsystem (20) einen Speicher (24) zum Hinterlegen von Daten und eine Rechenvorrichtung (23) zur Verarbeitung der in dem Speicher (24) hinterlegten Daten umfasst, wobei das Fahrerassistenzsystem (20) eine grafische Benutzerschnittstelle (19) aufweist, mittels der zumindest ein Teil der Arbeitsprozessstrategie vorgebbar ist, wobei ein Erfüllungsgrad konkurrierender Qualitätskriterien (33, 34; 33, 35) mittels der grafischen Benutzerschnittstelle (19) einstellbar ist, wobei als ein jeweiliges Qualitätskriterium "Verdichtbarkeit" (34) oder "Kornaufschluss" (35) einem Qualitätskriterium "Flächenleistung" (33) konkurrierend gegenübersteht und diese wechselweise voneinander abhängigen Qualitätskriterien "Verdichtbarkeit" (34) und "Flächenleistung" (33) bzw. "Kornaufschluss" (35) und "Flächenleistung" (33) mittels der grafischen Benutzerschnittstelle (19) visualisierbar sind, **dadurch gekennzeichnet, dass** den paarweise konkurrierenden Qualitätskriterien (33, 34; 33, 35) jeweils eine Erfüllungsgradvariable (E1, E2) zugeordnet ist, die jeweils durch ein virtuelles Bedienelement (27, 32) der grafischen Benutzerschnittstelle (19) visualisierbar und einstellbar ist.

2. Selbstfahrender Feldhäcksler nach Anspruch 1 , **dadurch gekennzeichnet, dass** die konkurrierenden Qualitätskriterien "Verdichtbarkeit" (34) und "Flächenleistung" (33) durch einen Betriebsparameter "Schnittlänge" beeinflussbar sind.

3. Selbstfahrender Feldhäcksler (1) nach einem der Ansprüche 1 bis 2, **dadurch gekennzeichnet, dass** die konkurrierenden Qualitätskriterien "Kornaufschluss" (35) und "Flächenleistung" (33) durch einen Betriebsparameter "Spaltweite" und/oder "Differenzdrehzahl" der Nachbehandlungsvorrichtung (10) beeinflussbar sind.

4. Selbstfahrender Feldhäcksler (1) nach einem der Ansprüche 1 bis 3, **dadurch gekennzeichnet, dass** das Fahrerassistenzsystem (20) eine Kommunikationsschnittstelle (28) umfasst, welche zum Empfang von Daten einer einem anderen am Ernteprozess beteiligten Prozessteilnehmer zugeordneten Datenverarbeitungsvorrichtung (37) eingerichtet ist, wobei die Datenverarbeitungsvorrichtung (37) eine grafische Benutzerschnittstelle aufweist, welche der Visualisierung der vorgegebenen Arbeitsprozessstrategie dient.

5. Selbstfahrender Feldhäcksler (1) nach Anspruch 4, **dadurch gekennzeichnet, dass** die Datenverarbeitungsvorrichtung (37) zur Einstellung des Erfüllungsgrades konkurrierender Qualitätskriterien eingerichtet ist.

6. Selbstfahrender Feldhäcksler (1) nach Anspruch 5, **dadurch gekennzeichnet, dass** der Erfüllungsgrad der konkurrierenden Qualitätskriterien "Verdichtbarkeit" (34) und "Flächenleistung" (33) in Abhängigkeit von einem Arbeitsprozess der Prozesskette, der von einem von dem Feldhäcksler (1) unabhängigen Arbeitsfahrzeug zu erbringen ist, einstellbar ist.

7. Selbstfahrender Feldhäcksler (1) nach Anspruch 5 oder 6, **dadurch gekennzeichnet, dass** der Erfüllungsgrad der konkurrierenden Qualitätskriterien "Kornaufschluss" (35) und "Flächenleistung" (33) in Abhängigkeit von einem Arbeitsprozess der Prozesskette, der von einem von dem Feldhäcksler (1) unabhängigen Arbeitsfahrzeug zu erbringen ist, einstellbar ist.

8. Selbstfahrender Feldhäcksler (1) nach einem der Ansprüche 5 bis 7, **dadurch gekennzeichnet, dass** eine durch die Datenverarbeitungsvorrichtung (37) übermittelte Anforderung zur Änderung des Erfüllungsgrades konkurrierender Qualitätskriterien (33, 34; 33, 35) durch die grafische Benutzerschnittstelle (19) des Fahrerassistenzsystems (20) anzeigbar ist.

9. System zur Abarbeitung landwirtschaftlicher Arbeitsprozesse innerhalb einer Prozesskette, umfassend zumindest einen selbstfahrenden Feldhäcksler (1) nach einem der vorhergehenden Ansprüche, zumindest ein Transportfahrzeug sowie zumindest ein Verdichtungsfahrzeug (36), wobei wenigstens dem zumindest einen Verdichterfahrzeug (36) eine mit dem Fahrerassistenzsystem (20) bidirektional kommunizierende Datenverarbeitungsvorrichtung (37) mit einer grafischen Benutzerschnittstelle zugeordnet ist, wobei ein Erfüllungsgrad konkurrierender Qualitätskriterien (33, 34; 33, 35) mittels der grafischen Benutzerschnittstelle (19) des Verdichterfahrzeugs einstellbar ist, wobei als ein jeweiliges Qualitätskriterium "Verdichtbarkeit" (34) oder "Kornaufschluss" (35) einem Qualitätskriterium "Flächenleistung" (33) konkurrierend gegenübersteht und dass diese wechselweise voneinander abhängigen Qualitätskriterien "Verdichtbarkeit" (34) und "Flächenleistung" (33) bzw. "Kornaufschluss" (35) und "Flächenleistung" (33) mittels der grafischen Benutzerschnittstelle (19) visualisierbar sind, wobei den paarweise konkurrierenden Qualitätskriterien (33, 34; 33, 35) jeweils eine Erfüllungsgradvariable (E1, E2) zugeordnet ist, die jeweils durch ein virtuelles Bedienelement (27, 32) der grafischen Benutzerschnittstelle (19) des Verdichterfahrzeugs visualisierbar und einstellbar ist

10. System nach Anspruch 9 , **dadurch gekennzeichnet, dass** die Datenverarbeitungsvorrichtung (37) dazu eingerichtet ist, einen sich in Abhängigkeit von einer vorgenommenen Änderung des Erfüllungsgrad eines Qualitätskriteriums ändernden Erntegutparameter anzuzeigen.

## Claims

1. A self-propelled forage harvester (1) for executing an agricultural working process within a process chain, with a plurality of operating units including a feeder device (3), a chopper device (6) as well as a post-treatment device (10), and with a driver assistance system (20) for controlling the operating units in accordance with at least one working process strategy which can be specified and which is orientated towards compliance with at least one quality criterion (33, 34, 35), wherein the driver assistance system (20) comprises a memory (24) for storing data and a computer device (23) for processing the data stored in the memory (24), wherein the driver assistance system (20) has a graphical user interface (19) by means of which at least part of the working process strategy can be specified, wherein a quality criterion (33, 34, 35) which competes with a degree of compliance can be adjusted by means of the graphical user interface (19), wherein, as a respective quality criterion, "compactibility" (34) or "corn cracking" (35) competes against an "area output" (33) quality criterion and these alternately mutually dependent quality criteria "compactibility" (34) and "area output" (33) or "corn cracking" (35) and "area output" (33) can be visualised by means of the graphical user interface (19), **characterized in that** a respective degree of compliance variable (E1, E2) is associated with the paired competing quality criteria (33, 34; 33, 35) which can respectively be visualised and adjusted by means of a virtual operating element (27, 32) of the graphical user interface (19).

2. The self-propelled forage harvester according to claim 1, **characterized in that** the competing quality criteria "compactibility" (34) and "area output" (33) can be influenced by means of a "chop length" operating parameter.

3. The self-propelled forage harvester (1) according to claim 1 or claim 2, **characterized in that** the competing quality criteria "corn cracking" (35) and "area output" (33) can be influenced by means of a "gap width" and/or "speed difference" operating parameter of the post-treatment device (10).

4. The self-propelled forage harvester (1) according to one of claims 1 to 3, **characterized in that** the driver assistance system (20) comprises a communications interface (28) which is configured to receive data from a data processing device (37) associated with another process participant involved in the harvesting process, wherein the data processing device (37) has a graphical user interface which serves for the visualisation of the specified working process strategy.

5. The self-propelled forage harvester (1) according to claim 4, **characterized in that** the data processing device (37) is configured to adjust the degree of compliance of competing quality criteria.

6. The self-propelled forage harvester (1) according to claim 5, **characterized in that** the degree of compliance of the competing quality criteria "compactibility" (34) and "area output" (33) can be adjusted as a function of a working process of the process chain which is to be carried out by a working vehicle which is independent of the forage harvester (1).

7. The self-propelled forage harvester (1) according to claim 5 or claim 6, **characterized in that** the degree of compliance of the competing quality criteria "corn cracking" (35) and "area output" (33) can be adjusted as a function of a working process of the process chain which is to be carried out by a working vehicle which is independent of the forage harvester (1).

8. The self-propelled forage harvester (1) according to one of claims 5 to 7, **characterized in that** a request transmitted by means of the data processing device (37) to vary the degree of compliance of competing quality criteria (33, 34; 33, 35) can be displayed by the graphical user interface (19) of the driver assistance system (20).

9. A system for executing agricultural working processes within a process chain, comprising at least one self-propelled forage harvester (1) according to one of the preceding claims, at least one transport vehicle as well as at least one compacting vehicle (36), wherein a data processing device (37) with a graphical user interface which can communicate with the driver assistance system (20) in both directions is associated with the at least one compacting vehicle (36), wherein a degree of compliance of competing quality criteria (33, 34; 33, 35) can be adjusted by means of the graphical user interface (19) of the compacting vehicle, wherein, as a respective quality criterion, "compactibility" (34) or "corn cracking" (35) competes against an "area output" (33) quality criterion and in that these alternately mutually dependent quality criteria "compactibility" (34) and "area output" (33) or "corn cracking" (35) and "area output" (33) can be visualised by means of the graphical user interface (19), wherein a respective degree of compliance variable (E1, E2) is associated with the paired competing quality criteria (33, 34; 33, 35) which can respectively be visualised and adjusted by means of a virtual operating element (27, 32) of the graphical user interface (19).

10. The system according to claim 9, **characterized in that** the data processing device (37) is configured to display a parameter of the harvested material as a function of a predetermined variation in the degree of compliance of a quality criterion.

## Revendications

1. Ensileuse automotrice (1) pour exécuter un processus de travail agricole à l'intérieur d'une chaîne de processus, comprenant plusieurs organes de travail incluant un dispositif d'amenée (3), un dispositif de hachage (6) ainsi qu'un dispositif de post-traitement (10), et comprenant un système d'assistance à la conduite (20) pour actionner les organes de travail selon au moins une stratégie de processus de travail prescriptible qui vise à remplir au moins un critère de qualité (33, 34, 35), le système d'assistance à la conduite (20) incluant une mémoire (24) pour enregistrer des données et un dispositif de calcul (23) pour traiter les données enregistrées dans la mémoire (24), le système d'assistance à la conduite (20) comportant une interface utilisateur graphique (19) au moyen de laquelle au moins une partie de la stratégie de processus de travail est prescriptible, un degré de remplissage de critères de qualité concurrents (33, 34 ; 33, 35) étant réglable au moyen de l'interface utilisateur graphique (19), « compactabilité » (34) ou « éclatement des grains » (35) étant opposés en concurrence comme critère de qualité respectif à un critère de qualité « rendement » (33), et ces critères de qualité alternativement interdépendants « compactabilité » (34) et « rendement » (33), respectivement « éclatement des grains » (35) et « rendement » (33) étant visualisables au moyen de l'interface utilisateur graphique (19), **caractérisée en ce qu'**aux critères de qualité concurrents par paires (33, 34 ; 33, 35) est respectivement associée une variable de degré de remplissage (E1, E2) qui est visualisable et réglable respectivement par l'intermédiaire d'un élément de manœuvre virtuel (27, 32) de l'interface utilisateur graphique (19) .

2. Ensileuse automotrice selon la revendication 1, **caractérisée en ce que** les critères de qualité concurrents « compactabilité » (34) et « rendement » (33) peuvent être influencés par un paramètre d'exploitation « longueur de coupe ».

3. Ensileuse automotrice (1) selon une des revendications 1 à 2, **caractérisée en ce que** les critères de qualité concurrents « éclatement des grains » (35) et « rendement » (33) peuvent être influencés par un paramètre d'exploitation « largeur d'intervalle » et/ou « vitesse de rotation différentielle » du dispositif de post-traitement (10).

4. Ensileuse automotrice (1) selon une des revendications 1 à 3, **caractérisée en ce que** le système d'assistance à la conduite (20) inclut une interface de communication (28) qui est agencée pour recevoir des données d'un dispositif de traitement de données (37) associé à un autre participant au processus prenant part au processus de récolte, le dispositif de traitement de données (37) comportant une interface utilisateur graphique qui sert à visualiser la stratégie de processus de travail prescrite.

5. Ensileuse automotrice (1) selon la revendication 4, **caractérisée en ce que** le dispositif de traitement de données (37) est agencé pour régler le degré de remplissage de critères de qualité concurrents.

6. Ensileuse automotrice (1) selon la revendication 5, **caractérisée en ce que** le degré de remplissage des critères de qualité concurrents « compactabilité » (34) et « rendement » (33) est réglable en fonction d'un processus de travail de la chaîne de processus qui doit être accompli par un véhicule de travail indépendant de l'ensileuse (1) .

7. Ensileuse automotrice (1) selon la revendication 5 ou 6, **caractérisée en ce que** le degré de remplissage des critères de qualité concurrents « éclatement des grains » (35) et « rendement » (33) est réglable en fonction d'un processus de travail de la chaîne de processus qui doit être accompli par un véhicule de travail indépendant de l'ensileuse (1).

8. Ensileuse automotrice (1) selon une des revendications 5 à 7, **caractérisée en ce qu'**une demande transmise par l'intermédiaire du dispositif de traitement de données (37) pour modifier le degré de remplissage de critères de qualité concurrents (33, 34 ; 33, 35) peut être affichée par l'intermédiaire de l'interface utilisateur graphique (19) du système d'assistance à la conduite (20).

9. Système d'exécution de processus de travail agricole à l'intérieur d'une chaîne de processus, incluant au moins une ensileuse automotrice (1) selon une des revendications précédentes, au moins un véhicule de transport ainsi qu'au moins un véhicule de compactage (36), au moins au au moins un véhicule de compactage (36) étant associé un dispositif de traitement de données (37) communiquant de façon bidirectionnelle avec le système d'assistance à la conduite (20) et muni d'une interface utilisateur graphique, un degré de remplissage de critères de qualité concurrents (33, 34 ; 33, 35) étant réglable au moyen de l'interface utilisateur graphique (19) du véhicule de compactage, « compactabilité » (34) ou « éclatement des grains » (35) étant opposés en concurrence comme critère de qualité respectif à un critère de qualité « rendement » (33), et ces critères de qualité alternativement interdépendants « compactabilité » (34) et « rendement » (33), respectivement « éclatement des grains » (35) et « rendement » (33) étant visualisables au moyen de l'interface utilisateur graphique (19), aux critères de qualité concurrents par paires (33, 34 ; 33, 35) étant respectivement associée une variable de degré de remplissage (E1, E2) qui est visualisable et réglable respectivement par l'intermédiaire d'un élément de manœuvre virtuel (27, 32) de l'interface utilisateur graphique (19) du véhicule de compactage.

10. Système selon la revendication 9, **caractérisé en ce que** le dispositif de traitement de données (37) est agencé pour afficher un paramètre de produit récolté variant en fonction d'une modification apportée au degré de remplissage d'un critère de qualité.
